# EUROPEAN PATENT APPLICATION

(11) **EP 1 879 044 A1**
(43) Date of publication of application: **16.01.2008**
(21) Application number: 07011063.0
(22) Date of filing: 05.06.2007
(51) Int. Cl.: G01S 7/486

(54) **Radar device**

(30) Priority: 10.07.2006 JP 2006189640
(71) Applicant: OMRON CORPORATION, Kyoto-shi, Kyoto 600-8530 (JP)
(72) Inventor: Ishio, Wataru c/o Omron Corporation, Kyoto-shi, Kyoto 600-8530 (JP); Fujioka, Ryoji c/o Omron Corporation, Kyoto-shi, Kyoto 600-8530 (JP); Morikawa, Yuichi, Kanagawa 248-0032 (JP)
(74) Representative: Kilian, Helmut

(57) **Abstract**

A radar device has a light projecting circuit for projecting light to an object. Reflected light from the object is received by a first light receiving circuit and a second light receiving circuit and converted into signals. The first and second light receiving circuits each have an activity range in which the outputted signal is proportional to the logarithm of the quantity of received light. The activity range of the first light receiving circuit is lower than the activity range of the second light receiving circuit.

## Description

### Background of the Invention

This invention relates to a radar device for measuring the distance to an object outdoors by irradiating near-infrared light or the like to it and receiving reflected light therefrom.

Distance-measuring apparatus using a radar device for scanning the front outdoors with a laser beam of near-infrared light or the like to detect the presence or absence of an object in front (such as a front-going vehicle, an obstacle or a pedestrian in the case of a vehicle-mounted radar device), as well as its distance, from the incident light including reflected light have been coming to be popularly used. Conventional radar devices have been for causing laser light emitted from a laser diode to be reflected from an object, receiving the reflected light with a photodiode and measuring its position based on the interval between the time when the irradiating light is emitted and the time when the reflected light is received (or when the quantity of received reflected light has a peak).

Since the PIN photodiode used in a radar device has a low S/N ratio, a light receiving circuit is formed by providing an amplifier to the output of the PIN photodiode in order to increase its light receiving sensitivity. Since the circuit noise is also amplified in this case, however, there has been a limit to the detection of reflected light with low brightness.

For this reason, radar devices using an avalanche diode, which is a diode with a high light receiving sensitivity, capable of detecting even reflected light of low brightness, are coming to be known, as disclosed, for example, in Japanese Patent Publication Tokkai 11-160432. An avalanche diode is basically an element with a high light receiving sensitivity with lower noise than PIN diode, its light receiving sensitivity being settable within a certain degree according to the provided bias voltage. If the bias voltage is set high, its sensitivity becomes high, and if the bias voltage is set low, its sensitivity can be set low. The radar device disclosed in aforementioned Japanese Patent Publication Tokkai 11-160432 uses in its light receiving circuit an avalanche photodiode with its bias voltage set high such that even reflected light with a low brightness can be observed with a high level of accuracy.

In the outdoor environment in which a laser radar of this type is used, however, the variety in the reflectivity of objects and their distances is quite large. In other words, objects having a wide range of reflectivity are scattered over distances of a large range. The intensity of background light also changes significantly between the daytime and nighttime. Thus, the dynamic range of the incident light is extremely wide.

PIN photodiodes and avalanche photodiodes have the problem of saturation of the measured value of the quantity of received light when the incident light has a high brightness exceeding a limit of detection. Thus, if light receiving sensitivity of the light receiving circuit is increased in order to observe reflected light of a low brightness outdoors where the dynamic range of the incident light is extremely wide as explained above, reflected light with a low brightness may be observed but it may not be possible to observe reflected light with a high brightness accurately and this causes a drop in the accuracy of observation.

If a diaphragm is added to a lens for controlling the quantity of received light itself, the problem of saturation of the quantity of received light can be solved but it becomes difficult to detect reflected light with a low brightness. If the bias voltage applied to an avalanche photodiode is reduced, the light receiving sensitivity of the avalanche photodiode itself becomes controlled and the problem of saturation of the received light can be eliminated but the parasitic capacitance of the avalanche photodiode itself increases rapidly and the response to high-speed signals becomes poorer and the distance-measuring capability is adversely affected.

### Summary of the Invention

It is therefore an object of this invention to provide a radar device capable of accurately measuring the position of an object even in an environment where the dynamic range of the incident light is wide.

This invention relates to a radar device comprising a light projecting circuit for projecting light to an object and a first light receiving circuit and a second light receiving circuit for receiving reflected light from the object and converting the received light into signals wherein the first and second light receiving circuits each have an activity range in which the outputted signal is proportional to the logarithm of the quantity of received light and wherein the activity range of the first light receiving circuit is lower than the activity range of the second light receiving circuit.

According to this invention, reflected light is received by means of a plurality of light receiving circuits each having a different activity range (defined as above). Signals proportional to the logarithm of the quantity of received light with a high brightness are outputted from a first light receiving circuit and those proportional to the logarithm of the quantity of received light with a low brightness are outputted from a second light receiving circuit.

In the above, the activity ranges of the first and second light receiving circuits are so set as to overlap with each other such that outputs proportional to the logarithm of the quantity of light can be obtained from both the first and second light receiving circuits for incident light of an intermediate brightness corresponding to the overlapped portion.

The first and second light receiving circuits may be respectively provided with a PIN photodiode and an avalanche photodiode. An avalanche photodiode (hereinafter referred to as the APD is adapted to convert incident light into an electric current by the avalanche effect and is an element with a much higher sensitivity that a PIN photodiode (hereinafter referred to as the PD) for converting incident light into an electric current by the Hall effect. Thus, output signals proportional to the logarithm of incident light with even a low brightness can be obtained by the APD. On the other hand, the PD is superior to the APD in the detection of objects by incident light with a high brightness and has no problem of deterioration in response characteristic or saturation against high-speed signals even if its sensitivity is set to be low.

Thus, if the second light receiving circuit is set so as to have a high sensitivity by driving it with a high bias voltage applied to it, for example, its parasitic capacitance can be reduced and output signals proportional to the logarithm of light quantity can be obtained even in the case of reflected light with a low brightness by securing response characteristic with respect to high-speed signals. As another example, if the first light receiving circuit is set so as to have a low sensitivity by reducing the amplification ratio of the output of its PD, the lowering of its S/N ratio can be controlled without amplifying the circuit noise. Thus, outputs proportional to the logarithm of the quantity of light can be obtained both from incident light with a high brightness and a lower brightness.

According to this invention, the reverse bias voltage on the avalanche diode of the second light receiving circuit is sequentially controlled based on the output from the first light receiving circuit for received light with a quantity of light that is within both the activity range of the first light receiving circuit and that of the second light receiving circuit. In general, the variations in the light receiving sensitivity of an APD are large against changes in temperature, and so-called temperature compensation is usually carried out by controlling the bias voltage by means of a temperature sensor. According to this structure of the invention, however, the reverse bias voltage applied to the APD is set based on the output signals from the first light receiving circuit which is stable against temperature changes, instead of the output from a temperature sensor. As a result, the structure of the light receiving circuit is simplified because the temperature compensation on the reverse bias voltage can be carried out with a temperature sensor.

The radar device of this invention may also comprise trouble detecting means for detecting a trouble, or an abnormal condition, in the first light receiving circuit or the second light receiving circuit based on the output from the first and second light receiving circuits for received light with a quantity of light that is within the activity ranges of these light receiving circuits. With such a structure, abnormality in either of the light receiving circuits can be detected by comparing the outputs from the two light receiving circuits.

The radar device of this invention may further comprise range resetting means for resetting, when the aforementioned trouble detecting means has detected a trouble in either of the light receiving circuits, the activity range of the other light receiving circuit without the trouble to make it wider.

When it is detected that either of the light receiving circuits is in an abnormal condition, the range resetting means will control the activity range of the normally functioning light receiving circuit so as to make up for the activity range of the light receiving circuit in the abnormal condition. Thus, even if one of the light receiving circuits becomes abnormal, it is possible to keep using the radar device although its characteristics may be deteriorated. This means that a radar device with a longer useful lifetime can be provided. The safety of the user can also be improved because the radar device of this invention will not stop operating suddenly by an abnormality.

In an example wherein the first light receiving circuit is provided with an PD and the second light receiving circuit is provided with an APD, if the first light receiving circuit breaks down, the reverse bias voltage applied to the APD is controlled so as to lower the sensitivity of the APD such that the activity range is widened. If it is the second light receiving circuit that breaks down, the amplification of the amplifier (with variable gain) provided downstream to the PD of the first light receiving circuit is increased so as to improve the light receiving sensitivity of the first light receiving circuit and to widen the activity range.

The radar device of this invention may further comprise synthesizing means for synthesizing outputs from both of the light receiving circuits and thereby generating a synthesized signal that is proportional to the logarithm of the quantity of received light over both the activity range of the first light receiving circuit and the activity range of the second light receiving circuit. Output signals from the light receiving circuits are thus combined to widen the dynamic range and the positions of objects can be accurately measured even in a situation where the reflectivity and distance to the objects vary significantly and the change in the intensity of the background light is large between the daytime and the nighttime.

The invention may by characterized also in that either the aforementioned synthesizing means or range resetting means operates according to results of detection by the trouble detecting means. Thus, even if either of the light receiving circuits breaks down, the activity range can be prevented from shrinking. Even if the dynamic range of the incident light is large, reflected light with a low brightness can be detected accurately and the distances to objects can be measured accurately.

In summary, a plurality of photodiodes with different activity ranges are used and an output signal is synthesized from their outputs. Thus, a peak of a high light reflector can be detected while a low light reflector is being detected. Response characteristics can be maintained for high-speed signals without lowering the bias voltage for the APD.

### Brief Description of the Drawings

Fig. 1A is a block diagram showing the structure of a radar device of this invention, and Fig. 1B shows the connections of the PD and the APD.
Fig. 2A shows the relationship between the amplifier outputs from the amplifiers and the quantity of light received by the PD and the APD, and Fig. 2B shows the relationship between the digital outputs of the A/D converters and the quantity of light received by the PD and the APD.
Fig. 3 shows the relationship between the amplifier outputs of the light receiving circuits and the positions of objects with different reflectivity.
Fig. 4 is a flowchart of the process of signal synthesis carried out by the CPU.
Figs. 5A and 5B are flowcharts of the trouble detection process by the CPU.
Figs. 6A and 6B are flowcharts of the temperature compensation process by the CPU.

### Detailed Description of the Invention

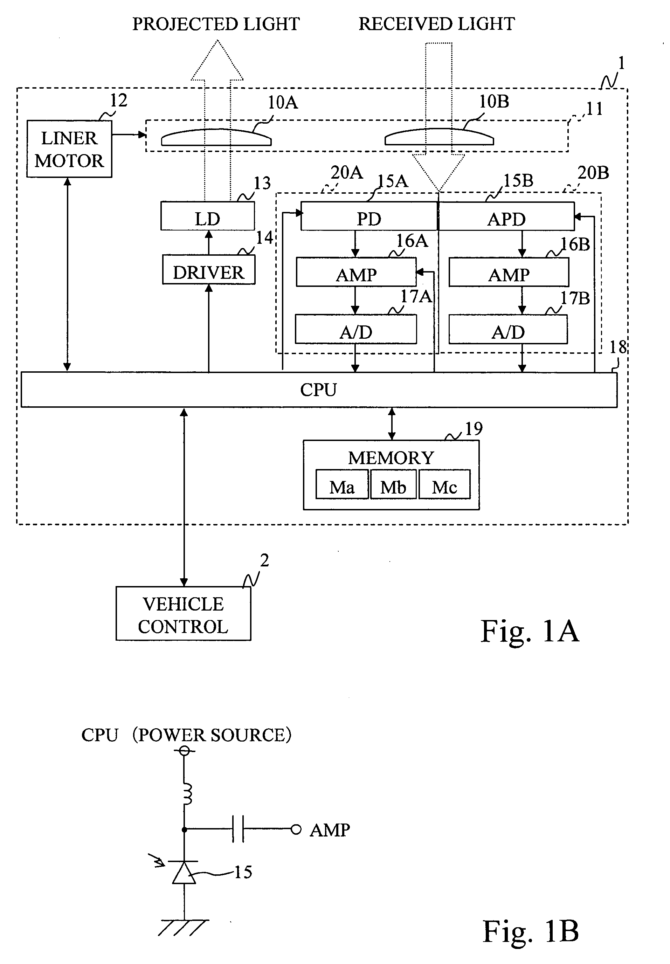

The invention is described next with reference to drawings. Fig. 1A is a block diagram of a radar device 1 comprising a lens unit 11, a linear motor 12, a laser diode (LD) 13, a driver 14, light receiving circuits 20A and 20B, a CPU 18 and a memory 19.

The lens unit 11 has a light projecting lens 10A and a light receiving lens 10B set on a same frame such that their optical axes are parallel to each other. The LD 13 is provided at the focus of the light projecting lens 10A and a PD (photodiode) 15A and an APD (avalanche photodiode) 15B are provided at the focus of the light receiving lens 10B. The linear motor 12 is connected to the CPU 18, and the lens unit 11 is oscillated to the right and to the left (with respect to the direction of motion of the automobile) with the oscillatory angle of the lens unit 11 being set by the control of the CPU 18.

The LD 13 is connected to the CPU 18 through the driver 14. The driver 14 is adapted to set the intensity of the light projected from the LD 13 based on the control by the CPU 18 and to order the laser irradiation. The LD 13 is a semiconductor infrared laser element adapted to irradiate laser with a projection intensity set by the laser irradiation order from the driver 14. The laser irradiated by the LD 13 is projected as a beam to the front of the automobile by means of the light projection lens 10A. As explained above, the radar device 1 projects the laser beam forward at a set angle (such as 20 degrees) to the right and to the left since the lens unit 11 is oscillated by the linear motor 12. The reflected beam by an object is received by the PD 15A and the APD 15B through the light receiving lens 10B.

A two-dimensional scan may be carried out by changing the direction of laser beam projection in a vertical (up or down) direction at the ends of the horizontal direction (right and left). In the case of a one-dimensional scan in the horizontal direction, the characteristics of the lens may be adjusted such that a laser beam that is wide in the perpendicular direction may be projected in the frontal direction of the automobile such that a range of light projection may be secured in the perpendicular direction.

The light receiving circuits 20A and 20B each include a PD 15A or an APD 15B, an amplifier 16A or 16B and an A/D converter 17A or 17B, respectively. The PD 15A and the APD 15B (both indicated by numeral 15 in Fig. 1B) are each set between the CPU 18 (or a power source controlled thereby) and the ground, having an anode connected on the side of the ground and a cathode on the side of the CPU so as to apply a reverse bias voltage controlled by the CPU 18. The current generated in the PD 15A by incident light is outputted from the cathode to the amplifier 16A and the current generated in the APD 15B is outputted from the cathode to the amplifier 16B. The output sides of the amplifiers 16A and 16B are connected to the CPU 18 respectively through the A/D converter 17A or 17B.

The PD 15A and the APD 15B used in the light receiving circuits 20A and 20B are respectively a PIN photodiode and an avalanche photodiode having sensitivity in the infrared region, and a reverse bias voltage somewhat lower than the breakdown voltage is applied to each of them. It is so arranged that if the photoelectric voltage due to incident light with a specified quantity is added to the reverse bias voltage, the total voltage will exceed the breakdown voltage such that a breakdown (or the avalanche phenomenon in the case of the APD) will be caused and a current according to the quantity of received light will be outputted to the amplifier.

The amplifiers 16A and 16B are variable gain amplifiers, serving to amplify the output currents from the PD 15A and the APD 15B respectively at a gain set by the CPU 18.

The A/D converters 17A and 17B serve to convert (normalize) the amplified outputs respectively of the amplifiers 16A and 16B into a digital output in specified gradations (such as 256 gradations). The level of the amplifier output corresponding to the largest of the specified gradations (such as 256) is set by the A/D converters 17A and 17B as the saturation level of the element (or the upper limit of the level where the amplifier output is in a linear relationship with the logarithm of the quantity of received light), or as the practical upper limit of the quantity of received light. The level corresponding to the smallest value (0) is set as the threshold level (above which an object in front of the automobile can be judged as being present). As a specific example, the CPU 18 may detect the quantity of received light for a plural number of times while light is not being projected. A threshold value may then be obtained by adding their average and a multiple of their fluctuations (standard deviation) by a factor and set to the A/D converters 17A and 17B.

The CPU 18 is connected to the light receiving circuits 20A and 20B, the linear motor 12, the driver 14, the memory 19 and a vehicle control device 2. It indicates the oscillation angle to the linear motor 12 and the intensity of projected light to the driver 14.

The CPU 18 controls and sets the activity range of the light receiving circuits 20A and 20B, or in particular the saturation levels of the PD 15A and the APD 15B by adjusting the reverse bias voltage of the light receiving circuits 20A and 20B. The activity range of the light receiving circuits 20A and 20B, and in particular their circuit noise is controlled and set by adjusting the gain of the amplifiers 16A and 16B.

As digital outputs from the light receiving circuits 20A and 20B are inputted, the CPU 18 saves them temporarily in the plurality of memory areas Ma-Mc of the memory 19. The CPU 18 generates a synthesized signal based on the data on the digital outputs stored in the memory 19. Thus, the CPU 18 may also be regarded as a synthesizer of this invention. The CPU 18 further serves to carry out recognition processes based on such synthesized signals, intensity of the projected light and the angle of light projection, as well as calculation processes for the control of the vehicle. The results of these processes are outputted to the vehicle control device 2.

Although an example was described above wherein the outputs from the light receiving circuits are synthesized after digitally converted, the radar device 1 may be adapted to synthesize analog signals themselves. In such a situation, it is preferable to use a synthesizer circuit comprising an operational amplifier to scale the analog output signals from the PD 15 and the APD 15B according to their sensitivity by carrying out gain and bias adjustments thereon and to selectively outputting the output signals from one of the diodes.

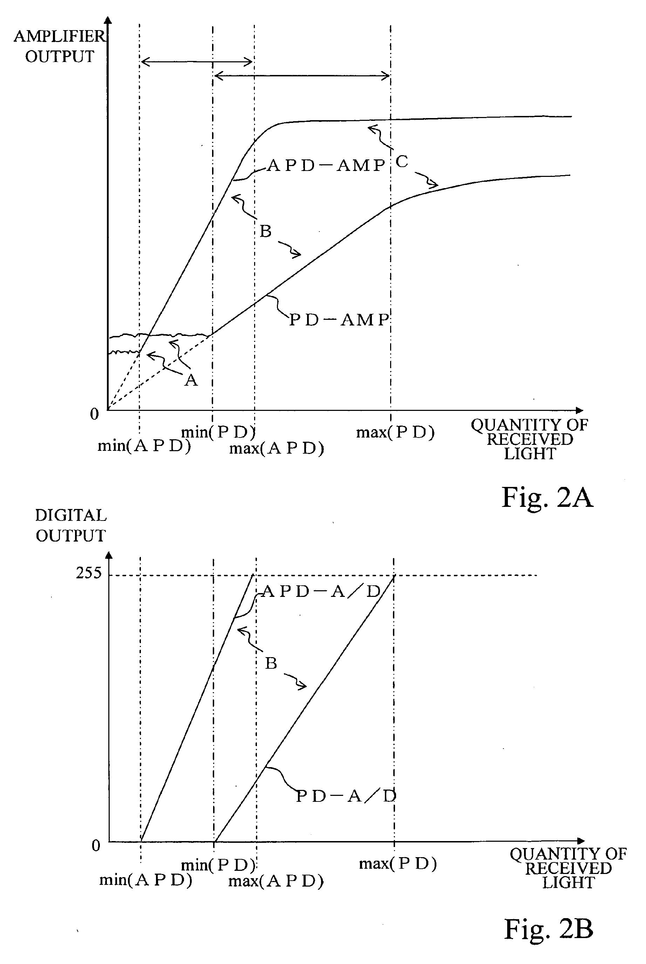

The relationships between the quantities of light received by the PD 15A and the APD 15B and the amplifier outputs from the amplifiers 16A and 16B are shown in Fig. 2A. The relationships between the quantities of light received by the PD 15A and the APD 15B and the digital outputs of the A/D converters 17A and 17B are shown in Fig. 2B. In these graphs, the horizontal axes show the quantity of received light logarithmically.

As shown in Fig. 2A, amplifier outputs (both PD-AMP and APD-AMP) include an output waveform A of which the main component is the circuit noise, a saturated output waveform C and a linearly changing output waveform B. Of these output waveforms, it is the linearly changing output waveforms B that indicate the activity range of the corresponding light receiving circuit. The output waveforms A indicate the range of the quantity of received light which will be determined to be below the threshold level (below min(PD) or min(APD)) by the A/D converters 17A and 17B on the downstream side. The output waveforms C indicate the range of the quantity of received light which will be determined to be above the saturation level (above max (PD) or max (APD)) by the A/D converters 17A and 17B on the downstream side.

The digital outputs (PD-A/D and APD-A/D) shown in Fig. 2B are obtained, as explained above, by converting the amplifier outputs into digital outputs with specified gradations (such as 256 gradations), converting the amplifier output at the lower limit of the quantity of received light showing the linearly changing output waveform B (min(PD) or min(APD)) to the minimum value of 0 and converting the amplifier output at the upper limit of the quantity of received light showing the linearly changing output waveform B (max(PD) or max(APD)) to the maximum value of 255.

The upper and lower limits of the activity range of the light receiving circuits, or the upper and lower limits of the linearly changing output waveforms B (min(PD), min(APD), max(PD) and max(APD)), can be adjusted by controlling the reverse bias voltages of the photodiodes and the gains of the amplifiers. According to this invention, therefore, gain and bias controls are carried out through the CPU 18 in order to set the activity ranges of the light receiving circuits. Explained more specifically, the CPU 18 controls the bias voltage of the PD 15A and the gain of the amplifier 16A such that the activity range of the light receiving circuit 20A will be the high brightness range (from medium to high quantity of received light) and controls the bias voltage of the APD 15B and the gain of the amplifier 16B such that the activity range of the light receiving circuit 20B will be the low brightness range (from low to medium quantity of received light). The range wherein only the light receiving circuit 20A will function (min (APD) - min (PD)), the range wherein both light receiving circuits 20A and 20B will function (min (PD) - max (APD)), and the range wherein only the light receiving circuit 20B will function (max (APD) - max (PD)) are arranged to be continuous.

The minimum quantity of received light min(PD) measurable by the light receiving circuit 20A is larger than the minimum quantity of received light min(APD) measurable by the light receiving circuit 20B such that reflected light with a low brightness cannot be detected by the light receiving circuit 20A, while the maximum quantity of received light max(PD) by the light receiving circuit 20A is larger than the maximum quantity of received light max(APD) by the light receiving circuit 20B and the light receiving circuit 20A is capable of detecting reflected light with a high brightness without saturating. The maximum quantity of received light max(APD) of the light receiving circuit 20B is larger than the maximum quantity of received light max(PD) of the light receiving circuit 20A such that the light receiving circuit 20B will be saturated by reflected light with a high brightness but the light receiving circuit 20B can detect reflected light with a low brightness because its minimum quantity of received light min(APD) is larger than the minimum quantity of received light min(PD) of the light receiving circuit 20A.

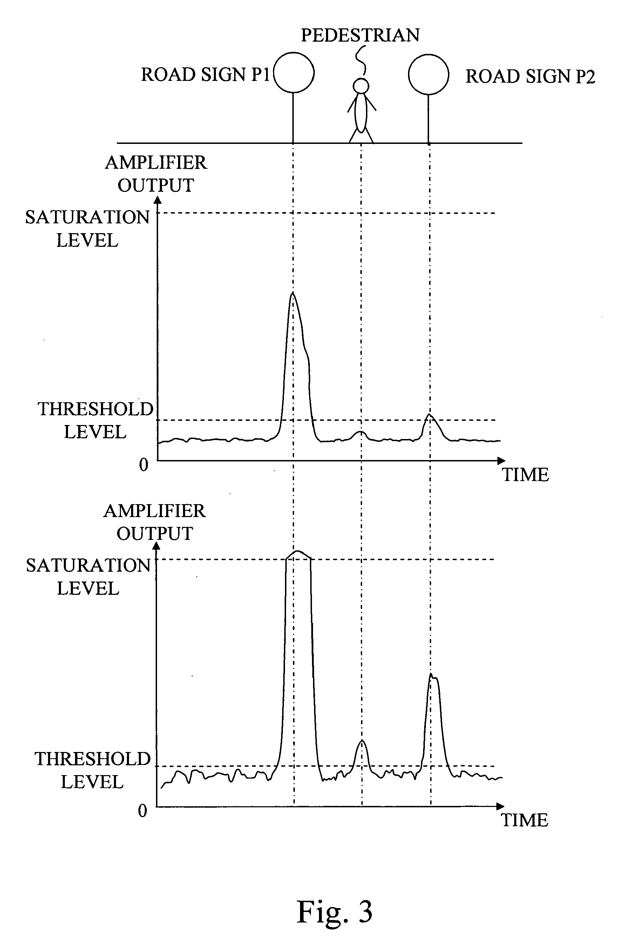

Fig. 3 shows the relationship between the amplifier outputs of the light receiving circuits 20A and 20B and the positions of objects with different reflectivity. Objects in front of the automobile are shown at the top. The amplifier output of the light receiving circuit 20A is shown in the middle and that of the light receiving circuit 20B is shown at the bottom.

The horizontal axes of Fig. 3 indicate the time elapsed from the moment when light is projected (which is an equivalent of the distance from the automobile). The vertical axes indicate the amplifier outputs. Fig. 3 shows an example where there is a road sign P1 as a high light reflector in front of the automobile, a pedestrian as a low light reflector behind it (as seen from the automobile) and another road sign P2 as a high light reflector further behind the pedestrian. It is to be remembered that the quantity of reflected light to be received decreases proportionally to the fourth power of the distance to the object.

As explained above, the light receiving circuit 20A is provided with a PD and its activity range is set in the range with a high brightness such that its amplifier output due to the reflected light with a high brightness from the road sign P1 with high reflectivity is below the threshold level and the saturation level of the A/D converter 17B. Thus, the light receiving circuit 20A is capable of detecting the peak time when the detected intensity of the road sign P1 becomes a maximum.

As for the pedestrian with low reflectivity, the amplifier output due to the reflected light with a low brightness therefrom becomes below the threshold level during a specified period of time. Thus, the light receiving circuit 20A cannot detect the presence of this pedestrian.

As for the road sign P2 farther away with high reflectivity, the amplifier output due to the reflected light therefrom becomes higher than the threshold value and below the saturation level during a certain period of time. Thus, the light receiving circuit 20A is capable of detecting the peak time when the detected intensity of the road sign P2 becomes a maximum.

As for the light receiving circuit 20B provided with an APD, its activity range is set in the range with a low brightness. In the present example, its amplifier output due to the reflected light from the road sign P1 with high reflectivity becomes higher than the saturation level of the A/D converter 17B. Thus, the light receiving circuit 20B is not capable of detecting the peak time when the detected intensity of the road sign P1 becomes a maximum.

As for the pedestrian with low reflectivity, the amplifier output due to the reflected light with a low brightness therefrom becomes higher than the threshold level and below the saturation level during a specified period of time. Thus, the light receiving circuit 20B is capable of detecting the peak time when the detected intensity of the pedestrian becomes a maximum.

As for the road sign P2 farther away with high reflectivity, the amplifier output due to the reflected light therefrom becomes higher than the threshold value and below the saturation level during a certain period of time. Thus, the light receiving circuit 20B is capable of detecting the peak time when the detected intensity of the road sign P2 becomes a maximum.

In summary, if only the digital outputs of the light receiving circuit 20A were observed, the CPU 18 would not be able to detect any value above the threshold value of the pedestrian, judging that the pedestrian is not present. If only the digital outputs of the light receiving circuit 20B were observed, on the other hand, the CPU 19 would be incapable of detecting the peak of the road sign P1 and hence detecting an accurate distance thereto. According to the present invention, the digital outputs of both light receiving circuits 20A and 20B are recorded in the memory areas Mb and Mc of the memory 19 for carrying out a process of signal synthesis, which is a process of generating a synthesized signal from the digital outputs recorded in the memory 19.

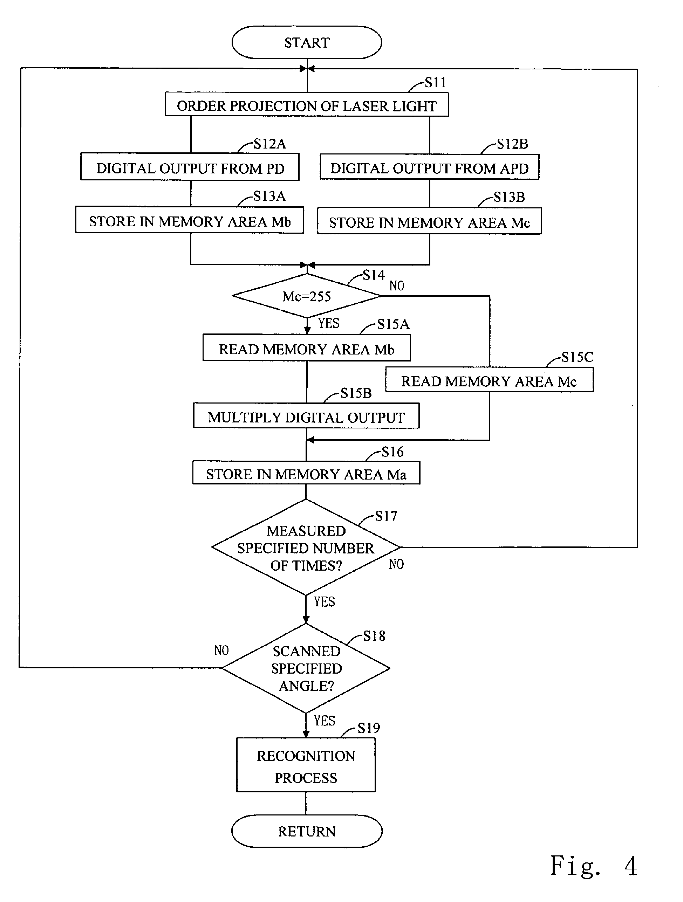

Fig. 4 is a flowchart of this signal synthesis process carried out by the CPU 18.

In this process, the CPU 18 firstly orders the projection of light to the driver 14 (Step S 11), causing the LD 13 to emit laser light. The CPU 18 applies reverse bias voltages to the PD 15A and the APD 15B such that the light receiving circuits 20A and 20B will have the activity ranges as described above and sets the gains of amplifiers 16A and 16B such that the PD 15A and the APD 15B will receive light from the forward direction within the activity ranges described above and output electrical signals (Steps S12A and S12B). These electrical signals are amplified by the amplifiers 16A and 16B and converted into digital outputs by the A/D converters 17A and 17B. The CPU 18 stores these digital outputs of the light receiving circuits 20A and 20B in the memory areas Mb and Mc of the memory 19, respectively (Steps S13A and S 13B).

Thereafter, the CPU 18 judges whether the maximum value 255 is stored in memory area Mc (as the digital output from the APD) or not (Step S 14). If the value stored in the memory area Mc is less than 255 (NO in Step S 14), it is judged that a signal below the saturation level (such as from the pedestrian or the road sign P2 in the example shown at the bottom of Fig. 3) and the data in the memory area Mc (or the digital output from the APD) are read out (Step S15C). If the value stored in the memory area Mc is 255 (YES in Step S14), it is judged that a signal above the saturation level has been obtained as the digital output from the APD (such as from the road sign P1 in the example shown at the bottom of Fig. 3) and the data in the memory area Mb (or the digital output from the PD) are read out (Step S15A).

In this situation, since the actually received quantity of reflected light corresponding to the data in the memory area Mb (or the digital output from the PD) is smaller (or 1/16 in the present example) than the actually received quantity of reflected light corresponding to the data in the memory area Mc (or the digital output from the APD), the data value in the memory area Mb (or the digital output from the PD) is multiplied by the CPU 18 (Step S15B). In the present example where the light receiving sensitivity of the light receiving circuit 20A with the PD is set to be 1/16 of the light receiving sensitivity of the light receiving circuit 20B with the APD, the data value of the memory area Mb (or the digital output from the PD) is multiplied by 16.

Thereafter, the CPU 18 stores in memory area Ma the multiplied data value of the memory area Mb or the data value of the memory area Mc as the value of the synthesized signal (Step S16). In other words, the value of the synthesized signal may be written as Ma = max (Mb*16, Mc) where Mc is the value by the APD, Mb is the value by the PD and Ma is the value of the synthesized signal to be stored in memory area Ma.

As calculated above, a synthesized signal accurately reflecting the distribution of the quantity of received light can be obtained such that even quantities of received light not detectable due to insufficient sensitivity of the PD can be detected by the highly sensitive APD.

Thereafter, the CPU 18 judges whether or not the measurement process of Steps S 11-S16 has been repeated for a specified number of times (Step S 17). Any number may be selected for this purpose but it may be about 20. If these steps have been repeated for the specified number of times (YES in Step S 17), it is judged next whether or not measurements have been made over a specified angle (Step S 18). As explained above, the radar device 1 is capable of projecting and receiving a laser beam in a specified horizontal angle (such as 20 degrees to the right and to the left) in the forward direction of the automobile. The angular resolution may be set according to the required degree of accuracy. In Step S18, it is determined whether or not one scan has been completed. If the scan over the specified angular range has not been completed (NO in Step S 18), the CPU 18 drives the linear motor 12 to change the range of measurement and repeats the processes described above.

If measurements over the specified angular range have been completed (YES in Step S 18), the CPU 18 carries out the process of recognizing the detected object (Step S 19). This recognition process is for judging whether the detected object is a human, a vehicle, a road sign, etc. The CPU 18 estimates the kind of the object from the detected data on the object such as its direction, distance, size and ground speed. This may be done by comparing with data of each kind of objects recorded in the memory 19 and the kind of the object may be estimated if the detected object agrees with any of them. The data on the estimated object such as its direction distance, speed and kind are transmitted to the vehicle control device 2 and used for its cruising control or emergency stopping.

By the processes as described above, the CPU 18 can learn the timing of receiving light from the synthesized signal. In other words, the CPU 18 continues to receive data on the quantity of received light and records the timing of obtaining them. The CPU 18 can calculate the distance of an object by measuring the difference in the timing of the ordering the projection of laser light and the timing of receiving light. The CPU 18 judges the timing that indicates a peak in the detected quantity of received light along the time axis as indicating the position of that object and judges it as its distance. Since the CPU 18 can detect the projection angle of the laser beam, as explained above, it can detect the presence of an object as well as its direction and distance based on such data.

By repeating the detection of an object continuously in time for a plural number of times, the CPU 18 can obtain the speed and direction (or the displacement vector) of the motion of that object. By judging the detected objects having the same displacement vector as being one object, the CPU 18 can also calculate the size (width) of an object. If an automobile speed sensor (not shown) is connected to the CPU 18 to detect the speed of the own automobile, it is also possible to calculate the ground speed of an object. Based on such data, the CPU 18 can judge whether the detected object is a human, a vehicle, a road sign, etc., thereby carrying out the process of recognizing the kind of an object.

After recognizing the kind of an object, the CPU 18 transmits the data on this object (such as its direction, distance, speed and kind) to the vehicle control device 2 on the downstream side. The vehicle control device 2 carries out the cruising control for running the own vehicle to follow a front-going vehicle by maintaining a constant distance in between or stopping suddenly to avoid a contact with a pedestrian, based on such received data on objects. When an emergency stopping is effected, the braking may fail to be timely or the braking may be effected uselessly unless the laser radar device measures the distance to an object accurately. In the past, radar devices having a sufficient dynamic range so as to be able to detect objects with high reflectivity and low reflectivity at the same time were not available such that pedestrians could not be detected or the position of objects with high reflectivity could not be accurately measured. A radar device of this invention uses simultaneously both an avalanche photodiode with high light receiving sensitivity and a PIN photodiode with low light receiving sensitivity and can widen the dynamic range virtually by synthesizing these detected values.

The CPU 18 is further adapted to carry out a trouble detection process. Fig. 5A shows the judgment flow in the trouble detection process, which is carried out by the CPU 18 first by judging whether any data value smaller than the maximum value of 255 and greater than the minimum value of 0 is stored in the memory area Mc (or the digital output from the APD) (Step S21). If the data value stored in the memory area Mc is 255 or 0 (NO in Step S21), the trouble judgment cannot be carried out and hence the process is then terminated.

If the data value stored in the memory area Mc is less than 255 and greater than 0 (YES in Step 21), the CPU 18 judges whether the data value stored in the memory area Mb (or the digital output from the PD) is less than the maximum value of 255 and greater than the minimum value of 0 (Step 22). If the data value stored in the memory area Mb is 255 or 0 (NO in Step S22), the trouble judgment cannot be carried out and hence the process is then terminated.

Next, the CPU 18 compares the data stored in the memory areas Mc and Mb and judges whether the value of the latter is a specified multiple of that of the former (Step S23). If the light receiving sensitivity of the light receiving circuit 20A provided with the PD is set to be 1/16 of that of the light receiving circuit 20B provided with the APD, the data value of the memory area Mb (or the digital output from the PD) is multiplied by its inverse (or 16) for the comparison.

If these values are the same (YES in Step S23), both light receiving circuits 20A and 20B may be considered to be operating normally. If they are not the same (NO in Step S23), on the other hand, it may be concluded that at least one of them is in an abnormal condition.

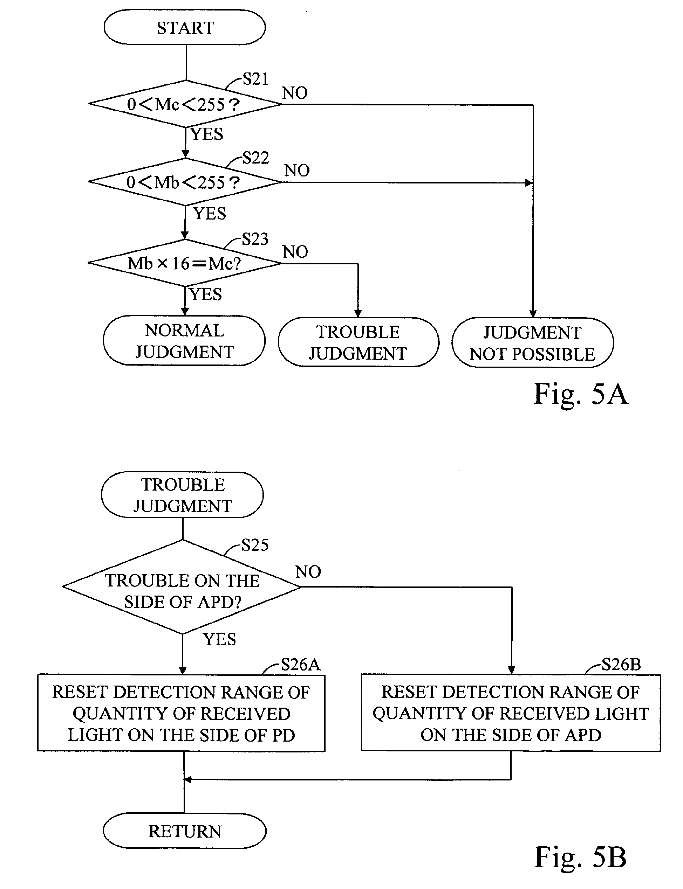

Fig. 5B shows the process by the CPU 18 in the case of the trouble judgment in Step S23. To start, the CPU 18 determines which of the light receiving circuits is in an abnormal condition, say, for the digital output of the waveforms (Step S25).

If the trouble is on the side of the APD, or if it is determined to be the light receiving circuit 20B that is in the abnormal condition (YES in Step S25), the activity range of the light receiving circuit 20A is reset (Step 26A). The reverse bias voltage of the PD 15A may be increased or the gain of the amplifier 16A may be increased so as to increase the light receiving sensitivity of the light receiving circuit 20A such that even reflected light with a low brightness can be detected.

If the trouble is on the side of the PD, or if it is determined to be the light receiving circuit 20A that is in the abnormal condition (NO in Step S25), the activity range of the light receiving circuit 20B is reset (Step 26B). The reverse bias voltage of the APD 15B may be decreased or the gain of the amplifier 16B may be decreased so as to decrease the light receiving sensitivity of the light receiving circuit 20B such that there is no saturation even in the presence of reflected light with a high brightness.

Since the variations in the light receiving sensitivity of an APD are generally great with respect to temperature changes, temperature compensation is usually carried out by controlling its bias voltage by means of a temperature sensor. In the case of this invention, too, the output of the light receiving circuit 20B may be stabilized against temperature changes by carrying out temperature compensation by way of the output of a temperature sensor.

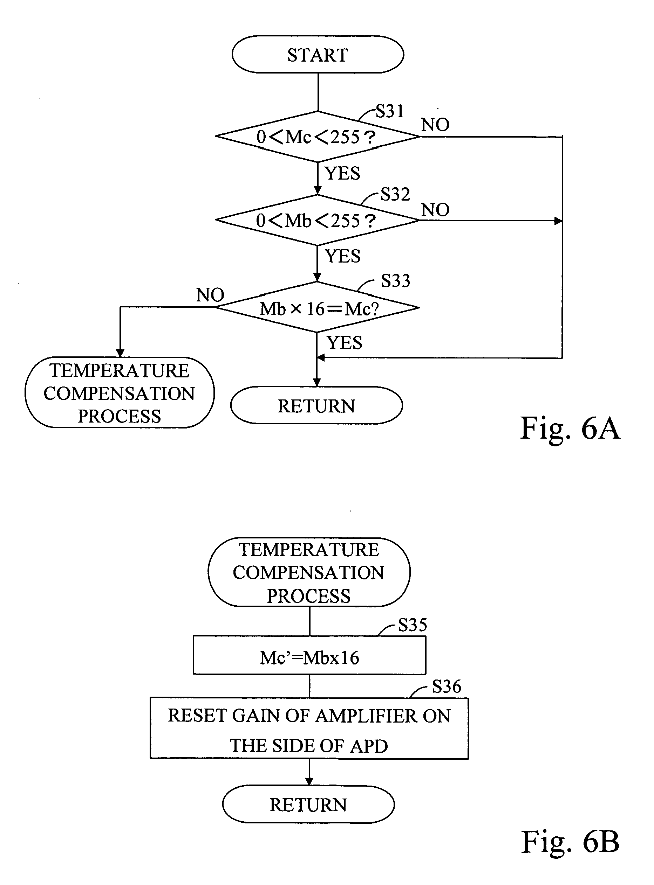

Temperature compensation can be effected in the case of the present invention even without using any temperature sensor. Since the variation in the output of a PD is generally small against temperature changes, the output of the PD can be used for the temperature compensation of the APD. Figs. 6A and 6B show this process.

To start, the CPU 18 judges whether or not a data value less than the maximum value of 255 and greater than the minimum value of 0 is stored in the memory area Me (or the digital output from the APD) (Step S31). If the data value stored in the memory area Mc is 255 or 0 (NO in Step S31), the process is terminated because temperature compensation cannot be carried out.

If the data value stored in the memory area Mc is less than 255 and greater than 0 (YES in Step 31), the CPU 18 judges whether or not a data value less than the maximum value of 255 and greater than the minimum value of 0 is stored in the memory area Mb (or the digital output from the PD) (Step S32). If the data value stored in the memory area Mb is 255 or 0 (NO in Step S32), the process is terminated because temperature compensation cannot be carried out.

Next, the CPU 18 compares the data stored in the memory areas Mc and Mb and judges whether the value of the latter is a specified multiple of that of the former (Step S33). If the light receiving sensitivity of the light receiving circuit 20A provided with the PD is set to be 1/16 of that of the light receiving circuit 20B provided with the APD, the data value of the memory area Mb (or the digital output from the PD) is multiplied by its inverse (or 16) for the comparison:

If these values are the same (YES in Step S33), both light receiving circuits 20A and 20B may be considered to be operating normally. If they are not the same (NO in Step S33), on the other hand, it may be concluded that there is a variation in the light receiving sensitivity of the light receiving circuit 20B due to temperature changes and the process shown in Fig. 6B is carried out.

In the temperature compensation process of Fig. 6B, the CPU 18 estimates the digital output in the case where temperature compensation has been accurately carried out by the light receiving circuit 20B on the side of the APD, based on the data stored in the memory area Mb (or the digital output from the light receiving circuit 20A on the side of the PD). Specifically, a value obtained by multiplying the value of the data stored in the memory area Mb by a specified multiplicative factor is defined as the digital output from the light receiving circuit 20B on the side of the APD when temperature compensation has been accurately carried output. If the light receiving sensitivity of the light receiving circuit 20A provided with the PD is set to be 1/16 of that of the light receiving circuit 20B with the APD, the value obtained by multiplying the data value of the memory area Mb (or the digital output from the PD) by its inverse (or 16) is set as the estimated value Mc'(Step S35).

Next, the CPU 18 compares the estimated value Mc' with the actual value of the memory area Mc and resets the reverse bias voltage for the APD 15B by calculating the voltage value that would be necessary to make Mc into Mc' (Step S36). This is how the temperature compensation process may be carried out.

Although the invention has been described above by way of a radar device mounted to an automobile, it now goes without saying that this invention can be applied to railroad vehicles and ships as well. Although a radar device using infrared light was disclosed herein, it also goes without saying that this is not intended to limit the scope of this invention. Radar devices for scanning the forward direction with visible light are also within the scope of this invention.

## Claims

1. A radar device comprising:
a light projecting circuit for projecting light to an object; and
a first light receiving circuit and a second light receiving circuit for receiving reflected light from said object and converting said received light into signals;
wherein said first and second light receiving circuits each have an activity range in which the outputted signal is proportional to the logarithm of the quantity of received light, and
wherein the activity range of said first light receiving circuit is lower than the activity range of said second light receiving circuit.

2. The radar device of claim 1 wherein the activity range of said first light receiving circuit and the activity range of said second light receiving circuit overlap.

3. The radar device of claim 1 wherein said first light receiving circuit includes a PIN photodiode and said second light receiving circuit includes an avalanche photodiode.

4. The radar device of claim 2 wherein said first light receiving circuit includes a PIN photodiode and said second light receiving circuit includes an avalanche photodiode.

5. The radar device of claim 3 wherein reverse bias voltage on said avalanche diode is sequentially controlled based on output from said first light receiving circuit for received light with a quantity of light that is within both the activity range of said first light receiving circuit and the activity range of said second light receiving circuit.

6. The radar device of claim 4 wherein reverse bias voltage on said avalanche diode is sequentially controlled based on output from said first light receiving circuit for received light with a quantity of light that is within both the activity range of said first light receiving circuit and the activity range of said second light receiving circuit.

7. The radar device of claim 2 further comprising trouble detecting means for detecting trouble in either of said first light receiving circuit and said second light receiving circuit based on output from said first light receiving circuit and said second light receiving circuit for received light with a quantity of light that is within both the activity range of said first light receiving circuit and the activity range of said second light receiving circuit.

8. The radar device of claim 5 further comprising trouble detecting means for detecting trouble in either of said first light receiving circuit and said second light receiving circuit based on output from said first light receiving circuit and said second light receiving circuit for received light with a quantity of light that is within both the activity range of said first light receiving circuit and the activity range of said second light receiving circuit.

9. The radar device of claim 6 further comprising trouble detecting means for detecting trouble in either of said first light receiving circuit and said second light receiving circuit based on output from said first light receiving circuit and said second light receiving circuit for received light with a quantity of light that is within both the activity range of said first light receiving circuit and the activity range of said second light receiving circuit.

10. The radar device of claim 7 further comprising range resetting means for resetting, when said trouble detecting means has detected a trouble in either of said first light receiving circuit and said second light receiving circuit, the activity range of the other light receiving circuit without the trouble to become wider.

11. The radar device of claim 8 further comprising range resetting means for resetting, when said trouble detecting means has detected a trouble in either of said first light receiving circuit and said second light receiving circuit, the activity range of the other light receiving circuit without the trouble to become wider.

12. The radar device of claim 9 further comprising range resetting means for resetting, when said trouble detecting means has detected a trouble in either of said first light receiving circuit and said second light receiving circuit, the activity range of the other light receiving circuit without the trouble to become wider.

13. The radar device of claim 7 further comprising synthesizing means for synthesizing outputs from both said first light receiving circuit and said second light receiving circuit and thereby generating a synthesized signal that is proportional to the logarithm of the quantity of received light over both the activity range of said first light receiving circuit and the activity range of said second light receiving circuit.

14. The radar device of claim 8 further comprising synthesizing means for synthesizing outputs from both said first light receiving circuit and said second light receiving circuit and thereby generating a synthesized signal that is proportional to the logarithm of the quantity of received light over both the activity range of said first light receiving circuit and the activity range of said second light receiving circuit.

15. The radar device of claim 9 further comprising synthesizing means for synthesizing outputs from both said first light receiving circuit and said second light receiving circuit and thereby generating a synthesized signal that is proportional to the logarithm of the quantity of received light over both the activity range of said first light receiving circuit and the activity range of said second light receiving circuit.

16. The radar device of claim 10 further comprising synthesizing means for synthesizing outputs from both said first light receiving circuit and said second light receiving circuit and thereby generating a synthesized signal that is proportional to the logarithm of the quantity of received light over both the activity range of said first light receiving circuit and the activity range of said second light receiving circuit.

17. The radar device of claim 11 further comprising synthesizing means for synthesizing outputs from both said first light receiving circuit and said second light receiving circuit and thereby generating a synthesized signal that is proportional to the logarithm of the quantity of received light over both the activity range of said first light receiving circuit and the activity range of said second light receiving circuit.

18. The radar device of claim 12 further comprising synthesizing means for synthesizing outputs from both said first light receiving circuit and said second light receiving circuit and thereby generating a synthesized signal that is proportional to the logarithm of the quantity of received light over both the activity range of said first light receiving circuit and the activity range of said second light receiving circuit.

19. The radar device of claim 13 wherein either of said synthesizing means and said range resetting means operates according to results of detection by said trouble detecting means.

20. The radar device of claim 14 wherein either of said synthesizing means and said range resetting means operates according to results of detection by said trouble detecting means.

21. The radar device of claim 15 wherein either of said synthesizing means and said range resetting means operates according to results of detection by said trouble detecting means.

22. The radar device of claim 16 wherein either of said synthesizing means and said range resetting means operates according to results of detection by said trouble detecting means.

23. The radar device of claim 17 wherein either of said synthesizing means and said range resetting means operates according to results of detection by said trouble detecting means.

24. The radar device of claim 18 wherein either of said synthesizing means and said range resetting means operates according to results of detection by said trouble detecting means.
